# EUROPÄISCHE PATENTSCHRIFT

(11) **EP 0 691 193 B1**
(45) Veröffentlichungstag und Bekanntmachung des Hinweises auf die Patenterteilung: **13.01.1999**
(21) Anmeldenummer: 95110046.0
(22) Anmeldetag: 28.06.1995
(51) Int. Cl.: B29C 63/46, F16L 9/147

(54) **Verfahren zum kontinuierlichen Herstellen eines ein Metallrohr und ein Kunststoff-Innenrohr aufweisenden Verbundrohres**
Method for the continuous production of a compound pipe formed from a metallic tube and an inner plastic tube
Procédé pour la fabrication continue d'un tube composite constitué d'un tube métallique et d'une tube intérieur en matière plastique

(30) Priorität: 05.07.1994 DE 4423474
(43) Veröffentlichungstag der Anmeldung: 10.01.1996
(73) Patentinhaber: Hewing GmbH, D-48607 Ochtrup (DE)
(72) Erfinder: Riesselmann, Franz-Josef, D-49393 Lohne (DE)
(74) Vertreter: Hilleringmann, Jochen, Dipl.-Ing.

(56) Entgegenhaltungen:
- DE-A- 3 405 640
- FR-A- 1 094 525
- GB-A- 1 310 915
- US-A- 3 429 954
- US-A- 3 856 905

## Beschreibung

Die Erfindung betrifft ein Verfahren zum kontinuierlichen Herstellen eines ein Metallrohr und ein Innenrohr aus thermoplastischem Kunststoff aufweisenden Verbundrohres, das ein um ein Kunststoff-Innenrohr gelegtes und zu einem Metallrohr geformtes Metallband aufweist, wie aus DE-A-34 05 640 bekannt.

Im Stand der Technik sind eine Vielzahl von Verfahren zum kontinuierlichen Herstellen eines Verbundrohres, das ein Kunststoff-Innenrohr und ein dieses fest umschließendes Metallrohr aufweist, bekannt. Bei derartigen Verbundrohren ist es wichtig, daß das Kunststoff-Innenrohr und das Metallrohr fest und zuverlässig miteinander verbunden sind.

Aus DE-OS 25 31 785 und CH 655 986 A1 sind Herstellungsverfahren bekannt, bei denen ein mit Spiel um das Kunststoff-Innenrohr herum gelegtes Metallband längsnahtverschweißt wird und anschließend dieses Metallrohr durch entsprechende Werkzeuge in seinem Durchmesser reduziert wird, womit es sich fest um das Kunststoff-Innenrohr legt. Das Kunststoff-Innenrohr wird dabei zuvor außen mit einer Haftmittelschicht versehen. Aus EP 0 024 220 B1 ist ein Verfahren bekannt, bei dem von innen in das aus einem metallischen Bandmaterial geformte Metallrohr das Kunststoff-Innenrohr eingespritzt und über ein entsprechendes Werkzeug, beispielsweise einen Preßdorn, fest gegen die Innenseite des Metallrohres gedrückt wird. Bei sämtlichen bekannten Verbundrohr-Herstellungsverfahren wird also entweder das Kunststoff-Innenrohr oder das Metallrohr mechanisch verformt, um einen festen Verbund zwischen Kunststoffrohr und Metallrohr zu erzielen.

Aus DE-A-34 05 640 ist ein Verfahren zur Verbundrohrherstellung bekannt, bei dem ein schlauchartiges Innenauskleidungsrohr unter Erwärmung durch Faltung (Flachdrücken o. dgl.) oder durch radiales Eindrücken im Außendurchmesser reduziert wird und danach in ein aus einem Metallband geformtes Rohr eingebracht wird. Durch Einleiten von heißen Gasen oder Fluiden in das Kunststoffrohr oder in den Zwischenraum zwischen dem Kunststoffrohr und dem Metallrohr nimmt das Kunststoffrohr wieder seine ursprüngliche Form ein, wobei es sich von innen an das Metallrohr anlegt.

Aus DE-OS 21 32 310 ist ein diskontinuierliches Verfahren zum Auskleiden von Leitungen oder Rohren unter Verwendung eines Futterrohres aus einem thermoplastischen Kunststoff bekannt. Für die Rohrauskleidung wird zunächst das Futterrohr, dessen Außendurchmesser ursprünglich größer ist als der Innendurchmesser des auszukleidenden Rohres, durch Kaltverformung durchmesserreduziert, um in diesem Zustand in das auszukleidende Rohr eingebracht zu werden. Anschließend wird das Futterrohr, das in seinem Außendurchmesser kleiner ist als das auszukleidende Metallrohr, im Durchmesser wieder vergrößert, so daß es sich von innen an das Metallrohr anlegt. Die Durchmesservergrößerung erfolgt mittels mechanischer Verformung des Innenrohres, beispielsweise durch einen durch das Kunststoffrohr hindurchgezogenen Dorn o.dgl. Werkzeug. Zur Unterstützung der radialen Ausdehnung des Futterrohres kann dieses bei der mechanischen Verformung erwärmt werden.

Der Erfindung liegt die Aufgabe zugrunde, ein kontinuierliches Herstellungsverfahrens für Verbundrohr anzugeben, bei dem der feste Verbund aus Metallrohr und Kunststoff-Innenrohr auf materialschonende Weise erfolgt.

Zur Lösung dieser Aufgabe wird mit der Erfindung ein Verfahren zum kontinuierlichen Herstellen eines Verbundrohres mit den in Anspruch 1 angegebenen Verfahrensschritten.

Ausgangspunkt des erfindungsgemäßen Verfahrens ist ein Kunststoff-Innenrohr, dessen Außendurchmesser größer ist als der Innendurchmesser des Metallrohres des Verbundrohres, und zwar um etwa 2 % bis 10 %, vorzugsweise 3 % bis 8 % und höchst bevorzugt 4 % bis 6 %. Das Kunststoff-Innenrohr wird vor dem Umgeben mit dem Metallband mittels entsprechender Werkzeuge im Durchmesser verringert, wobei es seine zylindrische Form beibehält. Hierzu wird das Innenrohr erwärmt und im erwärmten Zustand zwecks Durchmesserverrringerung verformt, was beispielsweise durch eine Rollenkalibrierungsvorrichtung erfolgen kann. Nach der Verformung wird das durchmesserreduzierte Innenrohr, das jetzt einen um insbesondere 3 % bis 12 %, vorzugsweise 4 % - 9 % und höchst bevorzugt 5 % bis 7 % reduzierten Durchmesser aufweist, abgekühlt (mittels eines Kühlmediums, wie beispielsweise Wasser oder Luft) oder kühlt von selbst (an der Luft) ab. Damit wird der Zustand, in dem sich das Innenrohr befindet (es weist nämlich den reduzierten Außendurchmesser auf), eingefroren. Um das im Durchmesser reduzierte Kunststoff-Innenrohr wird anschließend in gewohnter Weise das Metallband gelegt und zu einem Metallrohr geformt, das mit Spiel das Kunststoff-Innenrohr umgibt. Dabei weist das Metallrohr einen Innendurchmesser auf, der kleiner ist als der ursprüngliche Außendurchmesser des Kunststoff-Innenrohres vor dessen Durchmesserreduktion. Nachdem das Metallrohr geformt ist, wird das Kunststoff-Innenrohr von außerhalb des Metallrohres erwärmt, wodurch es aufgrund des sogenannten "Memory-Effekts" von thermoplastischem Kunststoff versucht, seine ursprüngliche Form vor der Durchmesserreduktion anzunehmen. Im Ergebnis vergrößert sich also das Kunststoff-Innenrohr in seinem Durchmesser, wodurch bewirkt wird, daß das Innenrohr sich fest von innen an das Metallrohr anlegt bzw. angepreßt wird. Hierbei bleibt die Form des Metallrohres aufrechterhalten. Nach dem erfindungsgemäßen Verfahren ist also zum festen Verbinden von Metallrohr und Kunststoff-Innenrohr eine mechanische Verformung weder des Kunststoff-Innenrohres noch des Metallrohres erforderlich. Der Vorgang des Verbindens beider Komponenten des Verbundrohres (Metallrohr und Kunststoff-Innenrohr) erfolgt also auf recht materialschonende Weise. Durch Versuche hat sich gezeigt, daß die Haftung zwischen beiden Rohren höher ist als bei den bekannten Verfahren, bei denen der Verbund durch Durchmesserreduktion des Metallrohres erfolgt.

Darüber hinaus hat sich herausgestellt, daß die Lufteinschlüsse zwischen Kunststoff-Innenrohr und Metallrohr geringer und weniger häufig sind als bei nach den bekannten Verfahren hergestellten Metallrohren.

Wie oben erwähnt, bleibt die Form des Metallrohres erhalten, wenn das Kunststoff-Innenrohr infolge seiner Außendurchmesservergrößerung von innen an das Metallrohr angepreßt wird. Die Aufrechterhaltung der Metallrohrform kann beispielsweise dadurch realisiert werden, daß die nach dem Umlegen des Metallbandes um das Kunststoff-Innenrohr einander zugewandten Längsseitenränder des Metallbandes fest miteinander verbunden werden, was z.B. durch Verkleben oder Verschweißen erfolgt. Im zuerst genannten Verfahren überlappen sich die beiden Längsseitenränder vorteilhafterweise, während es zum Verschweißen ausreichend ist, wenn die Längsseitenränder auf Stoß angeordnet sind. Es ist aber auch möglich, die Metallrohrform aufrechtzuerhalten, ohne daß die Längsseitenränder des Metallbandes miteinander fest verbunden sind. Durch entsprechende Werkzeuge, wie beispielsweise eine Rollenstation o.dgl., läßt sich die Form des Metallrohres in einem solchen Fall beibehalten, wenn das Kunststoff-Innenrohr erwärmt wird.

Die Erwärmung des Kunststoff-Innenrohres von außerhalb des Metallrohres erfolgt vorteilhafterweise durch eine Induktionsheizvorrichtung, die das Metallband bzw. das Metallrohr erwärmt, welches dann wiederum das innenliegende Kunststoffrohr erwärmt.

Nach dem erfindungsgemäßen Verfahren wird das Innenrohr in seinem Außendurchmesser um mehr als das Außendurchmesser-Übermaß zum Innendurchmesser des Metallrohres reduziert, bevor das Metallband um das Innenrohr gelegt wird. Damit wird das Innenrohr "mit Spiel" um das Kunststoff-Innenrohr gelegt; der Abstand ist insbesondere auch unter dem Aspekt, daß das Metallband längsnaht-verschweißt wird, von Vorteil.

In vorteilhafter Weiterbildung des erfindungsgemäßen Verfahrens ist ferner vorgesehen, daß auf das Kunststoff-Innenrohr eine Außenschicht aus Haftmittel aufgebracht wird, die den festen Verbund zwischen Kunststoff-Innenrohr und Metallrohr verbessert. Zweckmäßigerweise wird die Haftmittelaußenschicht nach der Durchmesserreduktion des Kunststoff-Innenrohres aufgebracht, wobei diese Schicht in dem Augenblick, in dem das Metallband um das Kunststoff-Innenrohr gelegt wird, keinerlei Haftwirkung aufweist. Erst bei der Erwärmung des Kunststoff-Innenrohres wird auch die Haftfunktion der Haftmittelschicht aktiviert, so daß es zu einem festen Verbund kommt.

Das erfindungsgemäße Verfahren wird vorteilhafterweise um den Verfahrensschritt des Aufbringens einer Außenkunststoffschicht auf das Metallrohr zur Bildung eines Kunststoff-Außenrohres ergänzt. Vor der Aufbringung dieser Kunststoffschicht wird zweckmäßigerweise auf das Metallrohr eine Schicht aus einem Haftmittel aufgebracht.

Für das erfindungsgemäße Verfahren ist sekundär, ob das Kunststoff-Innenrohr erst unmittelbar vor seiner Durchmesserreduktion, beispielsweise durch Extrusion, hergestellt worden ist oder ob das Kunststoff-Innenrohr zuvor hergestellt und auf eine Trommel o.dgl. aufgewickelt worden ist, um anschließend von dieser zur Herstellung des Verbundrohres abgenommen zu werden. Das auf der Trommel befindliche Kunststoff-Innenrohr kann bereits auch durchmesserreduziert sein und gegebenenfalls auch bereits mit der Außenschicht aus Haftmittel versehen sein. Insoweit bezieht sich die kontinuierliche Herstellung nach Erfindung auf die Ummantelung des Kunststoff-Innenrohres durch das Metallband, die Formung des Metallrohres aus dem Metallband und die feste Verbindung infolge einer Durchmesservergrößerung des Kunststoff-Innenrohres bei dessen Erwärmung.

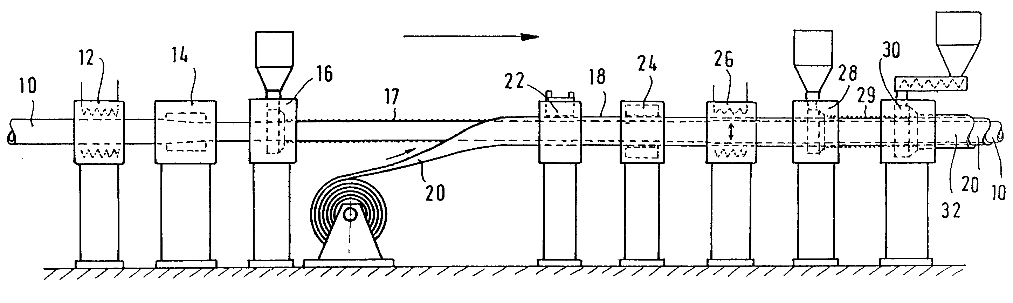

Nachfolgend wird anhand der Zeichnung, in der schematisch eine Anlage zur Verbundrohrherstellung dargestellt ist, ein Ausführungsbeispiel der Erfindung näher erläutert.

Ausgangspunkt des Verbundrohrherstellungsverfahrens ist das Kunststoff-Innenrohr 10 PE-X (vernetztes Polyethylen), das durch Extrusion hergestellt ist und gegebenenfalls auf einer Trommel o.dgl. zwischengelagert ist, um von dieser wieder abgenommen zu werden. Dieses Kunststoff-Innenrohr 10 weist einen Außendurchmesser auf, der größer ist als der Innendurchmesser des später noch herzustellenden Metallrohres. Das Kunststoff-Innenrohr 10 durchläuft zunächst eine Heizstation 12, in der es aufgewärmt wird. Im Anschluß daran wird das Rohr in einer Rollenkalibrierstation 14 im Durchmesser herunterkalibriert, so daß der Außendurchmesser des Kunststoffrohres 10 danach geringer ist als der Innendurchmesser des später herzustellenden Metallrohres. Nach der Durchmesserreduktion in der Rollenkalibrierstation 14 wird mittels der bei 16 angedeuteten Station auf das Kunststoffrohr 10 eine Haftvermittlerschicht 17 aufgebracht. Dies erfolgt beispielsweise mittels einer Rund- oder Ringdüse. Anschließend kühlt das durchmesserreduzierte und außen mit dem Haftvermittler versehene Kunststoff-Innenrohr 10 ab, so daß der Haftvermittler kein oder kaum Haftvermögen mehr aufweist.

Anschließend erfolgt die Herstellung des Metallrohres 18 aus einem Metallband 20, das beispielsweise aus Aluminium besteht. Dieses Metallband 20 wird im wesentlichen mit gleicher Geschwindigkeit wie das Kunststoff-Innenrohr 10 transportiert und in in der Zeichnung nicht näher dargestellten Weise von außen um das Kunststoff-Innenrohr 10 gelegt. Die Längsränder des Metallbandes 20 werden auf Stoß aneinandergelegt und in einer Schweißstation 22 verschweißt. Das mit radialem Spiel um das Kunststoff-Innenrohr 10 gebildete Metallrohr 18 durchläuft eine Rundformungsstation 24, in der, ohne daß es zu einer zumindest merklichen Durchmesserreduktion kommt, das Metallrohr 18 rundgeformt wird. Anschließend durchläuft die noch "lose", d.h. unverbundene Anordnung aus innenliegendem Kunststoff-Innenrohr 10 und außenliegendem Metallrohr 18 eine Induktions-Wärmestation 26, in der es zu einer Erwärmung des Kunststoff-Innenrohres 10 kommt. Aufgrund des sogenannten "Memory-Effekts" von Kunststoff ist das Kunststoff-Innenrohr 10 bestrebt, seine ursprüngliche Form vor der Durchmesserreduktion in der Station 14 wieder anzunehmen. Die Folge davon ist, daß sich das Kunststoff-Innenrohr 10 im Durchmesser vergrößert. Bei seinem Versuch, den Zustand vor dem "Herunterkalibrieren" wieder zu erreichen, drückt sich das Kunststoff-Innenrohr 10 fest von innen gegen das Metallrohr 18. Durch die Erwärmung in der Station 26 wird die Haftvermittlerschicht auf dem Kunststoff-Innenrohr 10 aktiviert, so daß es zu einem festen Verbund von Kunststoff-Innenrohr 10 und Metallrohr 18 kommt. Durch die Durchmesserzunahme werden aufgrund des radialen Spiels bestehende "Hohlräume" zwischen dem Kunststoff-Innenrohr 10 und dem Metallrohr 18 ausgefüllt. Bei der Durchmesserzunahme des Kunststoff-Innenrohres 10 kommt es zu einer wenn auch geringfügigen Verkürzung desselben, was durch entsprechendes Nachführen des Kunststoff-Innenrohres 10 ausgeglichen wird. Dies wird durch einen Tänzer mit Zugkraftvorgabe erreicht, der insofern die Anlage steuert, was in der Zeichnung im einzelnen nicht dargestellt ist.

Der jetzt feste Verbund aus Metallrohr 18 und Kunststoff-Innenrohr 10 durchläuft eine Station 28, in der außen auf das Metallrohr 18 eine Haftvermittlerschicht 29 aufgebracht wird. Anschließend wird auf den derart präparierten Rohrverbund mittels eines Extruders 30 von außen eine Kunststoff-Außenschicht zur Bildung eines Kunststoff-Außenrohres 32 aufgebracht.

## Patentansprüche

1. Verfahren zum kontinuierlichen Herstellen eines ein Metallrohr und ein Kunststoff-Innenrohr aufweisenden Verbundrohres, das ein um das Kunststoff-Innenrohr aus thermoplastischem Kunststoffmaterial gelegtes und zu einem Metallrohr (18) geformtes Metallband aufweist, bei dem
- ein Kunststoffrohr (10) mit einem Außendurchmesser verwendet wird, der größer ist als der Innendurchmesser des Metallrohres (18),
- das Kunststoffrohr (10) im erwärmten Zustand in ein Kunststoff-Innenrohr (10) umgeformt wird, und zwar bei Reduktion seines Außendurchmessers, so daß dieser kleiner ist als der Innendurchmesser des Metallrohres (18),
- das so bearbeitete Kunststoff-Innenrohr (10) abgekühlt wird bzw. abkühlt,
- das Metallband (20) um das abgekühlte Kunststoff-Innenrohr (10) gelegt und zu dem Metallrohr (18) geformt wird und
- unter Aufrechterhaltung der Form des Metallrohres (18) das Kunststoff-Innenrohr (10) erwärmt wird, wobei es sich infolge einer Außendurchmesservergrößerung von innen an das Metallrohr (18) anlegt,
**dadurch gekennzeichnet**, **daß**
- das Kunststoff-Innenrohr (10) unter Beibehaltung seiner zylindrischen Form im Außendurchmesser durch Herunterkalibrieren verringert wird und
- das Kunststoff-Innenrohr (10) zur Außendurchmesservergrößerung von außerhalb des Metallrohres (18) erwärmt wird.

2. Verfahren nach Anspruch 1, dadurch gekennzeichnet, daß das Metallband (20) auf Stoß um das abgekühlte Kunststoff-Innenrohr (10) herum angeordnet wird.

3. Verfahren nach Anspruch 2, dadurch gekennzeichnet, daß das Metallband (20) längsnahtverschweißt wird, bevor das Kunststoff-Innenrohr (10) erwärmt wird.

4. Verfahren nach Anspruch 1, dadurch gekennzeichnet, daß das Metallband (20) mit einander überlappenden Längsrändern um das abgekühlte Kunststoff-Innenrohr herum angeordnet wird.

5. Verfahren nach Anspruch 4, dadurch gekennzeichnet, daß das Metallband (20) an seinen überlappenden Längsrändern verklebt wird.

6. Verfahren nach einem der Ansprüche 1 bis 5, dadurch gekennzeichnet, daß vor dem Legen des Metallbandes (20) um das Kunststoff-Innenrohr (10) auf dieses eine erste Außenhaftmittelschicht (17) aufgebracht wird.

7. Verfahren nach Anspruch 6, dadurch gekennzeichnet, daß die erste Außenhaftmittelschicht (17) nach der Außendurchmesserreduktion des Kunststoff-Innenrohres (10) auf dieses aufgebracht wird.

8. Verfahren nach einem der Ansprüche 1 bis 7, dadurch gekennzeichnet, daß nach der Erwärmung des von dem Metallrohr (18) umgebenen Kunststoff-Innenrohres (10) auf das Metallrohr (18) eine Außenkunststoffschicht zur Bildung eines Außen-Kunststoffrohres (32) aufgebracht wird.

9. Verfahren nach Anspruch 8, dadurch gekennzeichnet, daß nach der Erwärmung des von dem Metallrohr (18) umgebenen Kunststoff-Innenrohres (10) vor der Aufbringung der Außenkunststoffschicht auf das Metallrohr (18) eine zweite Außenhaftmittelschicht (29) aufgebracht wird.

## Claims

1. A method for the continuous production of a compound tube having a metal tube and an inner plastic tube, said compound tube comprising a metal band laid around said inner plastic tube of a thermoplastic synthetic material and formed into a metal tube (18), wherein
- a plastic tube (10) is used of which the outer diameter is larger than the inner diameter of said metal tube (18),
- said plastic tube (10), while in a heated condition, is formed into an inner plastic tube (10), with the outer diameter of said inner plastic tube (10) being reduced to be smaller than the inner diameter of said metal tube (18),
- the thus treated inner plastic tube (10) is cooled or allowed to cool down,
- said metal band (20) is laid around the cooled inner plastic tube (10) and is formed into said metal tube (18), and
- while maintaining the shape of the metal tube (18), said inner plastic tube (10) is heated in a manner causing it internally abut said metal tube (18) due to an enlargement of its outer diameter,
**characterized in that**
- the outer diameter of said inner plastic tube (10) is reduced by calibration while maintaining the cylindrical shape of said tube (10),
- said inner plastic tube (10) is heated from outside of said metal tube (18) to enlarge the outer diameter of said inner plastic tube (10).

2. The method according to claim 1, characterized in that said metal band (20), with its edges in face-to-face abutment, is placed around the cooled inner plastic tube (10).

3. The method according to claim 2, characterized in that the metal band (20) is longitudinally bead-welded prior to heating said inner plastic tube (10).

4. The method according to claim 1, characterized in that said metal band (20) is arranged with mutually overlapping longitudinal edges around the cooled inner plastic tube.

5. The method according to claim 4, characterized in that said metal band (20) is adhered on its mutually overlapping longitudinal edges.

6. The method according to any one of claims 1 to 5, characterized in that, prior to laying said metal band (20) around said inner plastic tube (10), a first outer adhesive layer (17) is applied onto said inner plastic tube (10).

7. The method according to claim 6, characterized in that said first outer adhesive layer (17) is applied onto said inner plastic tube (10) after the outer diameter thereof has been reduced.

8. The method according to any one of claims 1 to 7, characterized in that, after heating the inner plastic tube (10) surrounded by said metal tube (18), an outer plastic layer is applied onto said metal tube (18) for forming an outer plastic tube (32).

9. The method according to claim 8, characterized in that after heating the inner plastic tube (10) surrounded by said metal tube (18) and prior to the application of said outer plastic layer, a second outer adhesive layer (29) is applied onto said metal tube (18).

## Revendications

1. Procédé pour la fabrication continue d'un tube composite constitué d'un tube métallique et d'un tube intérieur en matière plastique, qui présente un ruban métallique placé autour du tube intérieur en matière plastique thermoplastique et formé pour réaliser un tube métallique (18), dans lequel
- on utilise un tube en plastique (10) présentant un diamètre extérieur qui est supérieur au diamètre intérieur du tube métallique (18),
- le tube en plastique (10) est transformé à l'état chauffé, en un tube intérieur en plastique (10) et pour préciser, avec une réduction de son diamètre extérieur si bien que celui-ci est inférieur au diamètre intérieur du tube métallique (18),
- le tube intérieur (10) en plastique ainsi traité est refroidi ou refroidit,
- le ruban métallique (20) est placé autour du tube intérieur en plastique (10) et formé pour réaliser le tube métallique (18) et
- en maintenant la forme du tube métallique (18), le tube intérieur en plastique (10) est chauffé, ce qui lui permet de s'appliquer de l'intérieur contre le tube métallique (18), par suite d'un agrandissement de son diamètre extérieur,
caractérisé en ce que
- le tube intérieur en plastique (10) est réduit quant à son diamètre extérieur par réduction du calibre, tout en conservant sa forme cylindrique et
- en ce que le tube intérieur en plastique (10) est chauffé, pour augmenter son diamètre extérieur, à partir de l'extérieur du tube métallique (18).

2. Procédé selon la revendication 1, caractérisé en ce que le ruban métallique (20) est disposé, par poussée, tout autour du tube intérieur en plastique (10).

3. Procédé selon la revendication 2, caractérisé en ce que le ruban métallique (20) est soudé dans le sens longitudinal avant que le tube intérieur en plastique (10) ne soit chauffé.

4. Procédé selon la revendication 1, caractérisé en ce que le ruban métallique (20) est disposé, avec chevauchement de ses bords longitudinaux, autour du tube intérieur en plastique refroidi.

5. Procédé selon la revendication 4, caractérisé en ce que le ruban métallique (20) est collé sur ses bords longitudinaux se chevauchant.

6. Procédé selon l'une quelconque des revendications 1 à 5, caractérisé en ce que, avant la pose du ruban métallique (20) autour du tube intérieur en plastique (10), une première couche adhésive extérieure (17) est appliquée sur ce dernier.

7. Procédé selon la revendication 6, caractérisé en ce que la première couche adhésive extérieure (17) est appliquée sur le tube intérieur en plastique (10) après la réduction du diamètre extérieur de ce dernier.

8. Procédé selon l'une quelconque des revendications 1 à 7, caractérisé en ce que, après le chauffage du tube intérieur en plastique (10) entouré par le tube métallique (18), une couche extérieure de plastique est appliquée sur le tube métallique (18) pour former un tube en plastique extérieur (32).

9. Procédé selon la revendication 8, caractérisé en ce que, après le chauffage du tube intérieur en plastique (10) entouré par le tube métallique (18), une seconde couche adhésive (29) extérieure est appliquée sur le tube métallique (18).
